# EUROPÄISCHE PATENTSCHRIFT

(11) **EP 4 587 250 B1**
(45) Veröffentlichungstag und Bekanntmachung des Hinweises auf die Patenterteilung: **04.11.2026**
(21) Anmeldenummer: 23786470.7
(22) Anmeldetag: 13.09.2023
(51) Int. Cl.: B29C 45/28, B29C 45/27, B29C 45/30

(54) **HEISSKANALWERKZEUG, SPRITZGUSSVORRICHTUNG UND HERSTELLUNGSVERFAHREN**
HOT RUNNER MOULD, INJECTION MOULDING DEVICE, AND MANUFACTURING METHOD
MOULE À CANAL CHAUD, DISPOSITIF DE MOULAGE PAR INJECTION ET PROCÉDÉ DE FABRICATION

(30) Priorität: 14.09.2022 AT 507042022
(43) Veröffentlichungstag der Anmeldung: 23.07.2025
(73) Patentinhaber: HASCO Hasenclever GmbH + Co KG, 58513 Lüdenscheid (DE)
(72) Erfinder: LARISCH, Florian, 2353 Guntramsdorf (AT)
(74) Vertreter: Burger, Hannes Alfred
(86) Internationale Anmeldenummer: PCT/AT2023/060321
(87) Internationale Veröffentlichungsnummer: WO 2024/055056

(56) Entgegenhaltungen:
- EP-A1- 2 374 595
- EP-B1- 3 027 379
- CN-U- 201 471 689
- JP-A- H0 339 216
- US-A- 5 795 600
- ANONYM, WIKIPEDIA: "Strömungsschleifen", DE.WIKIPEDIA.ORG, 1 June 2020 (2020-06-01), pages 1 - 1, XP093106149, Retrieved from the Internet <URL:https://de.wikipedia.org/w/index.php?title=Str%C3%B6mungsschleifen&oldid=200522817> [retrieved on 20231127]

## Beschreibung

Die Erfindung betrifft ein Heißkanalwerkzeug zum Zuführen einer Schmelze zu einer Kavität, eine Spritzgussvorrichtung und ein Verfahren zur Herstellung eines Heißkanalwerkzeugs.

Gattungsgemäße Heißkanalwerkzeuge sind dem Durchschnittsfachmann bekannt. Als Heißkanalwerkzeug, Heißkanal oder Heißkanalsystem wird bei der Verarbeitung von Kunststoffen, insbesondere beim maschinellen Spritzgießen von Thermoplasten, ein Angusssystem bezeichnet, welches gegenüber der restlichen Spritzgussvorrichtung bzw. Spritzgießmaschine thermisch isoliert und höher temperiert bzw. beheizt ist. Beim Spritzgießen von Thermoplasten wird eine Kunststoffschmelze von einem Plastifizieraggregat der Spritzgussvorrichtung durch das heißkanalwerkzeug bzw. das Angusssystem über einen Anspritzpunkt in ein oder mehrere Formnester transportiert. Bei einem Heißkanalsystem ist das Heißkanalwerkzeug bzw. Angusssystem thermisch vom Rest des Werkzeuges getrennt und separat beheizt, sodass die Kunststoffschmelze im Heißkanalwerkzeug permanent fließfähig bleibt.

Heißkanalwerkzeuge sind mit einem oder mehreren Kanälen ausgebildet, in welchen Kanälen die temperierte bzw. heiße Schmelze in Richtung einer Düse, oftmals einer Nadelverschlussdüse, gefördert wird, wobei die Schmelze aus einem Anspritzpunkt der Düse in ein Formnest gespritzt wird. In dem Bereich, in dem die Schmelze auf die Ventilnadel der Nadelverschlussdüse trifft, respektive in dem Bereich, in dem der Kanal eine Ablenkung oder Biegung erfährt, kommt es zu einem sogenannten Nadelschatten, respektive einer sogenannten Totzone. In dieser Totzone im Bereich hinter der Ventilnadel, also in einem dem Einströmbereich der Schmelze gegenüberliegenden Bereich, herrscht somit keine gute Durchspülung.

Dieser unerwünschte Effekt und die damit einhergehende Problematik ist durch die DE10297576T5 bekannt geworden. Darin wird beschrieben, dass das Erstrecken einer Ventilnadel durch einen Verteiler zwischen der Ventilnadel und der Innenwand des Verteilerkanals eine Totzone oder einen Nadelschatten verursacht, der sich hinter und/oder unterhalb der Ventilnadel ausbildet. Eine Totzone ist ein Ort, in dem formbares Material des Schmelzestroms sich verlangsamt und eingefangen wird. Daher weist dieses Gebiet ein stagnierendes Strömungsmuster auf, das die Leistung des Verteilers beeinflusst. Totzonen sind unerwünscht, besonders bei Anwendungen mit Farbwechseln, weil die Anzahl von Zyklen, die benötigt werden, um die alte Farbe herauszuspülen, erhöht ist. Zudem kann es passieren, dass das im Bereich des Nadelschattens bzw. in der Totzone verbleibende Material bedingt durch die lange Verweilzeit degradiert oder verbrennt, was sich - wenn dieses Material herausgespült wird - nachteilig auf die mechanischen und optischen Eigenschaften der Schmelze auswirken kann.

Um diesen überaus nachteiligen Effekt zumindest zu reduzieren, wird versucht, die Anströmverhältnisse zu verbessern, indem die Schmelze führenden Kanäle geteilt werden, sodass die Ventilnadeln aus mehreren Richtungen angeströmt werden.

Beispielsweise beschreibt die WO2016131130A1 eine Verteilerbuchse mit einem primären Schmelzeauslasskanal, welcher in mehrere ergänzende bzw. zusätzlichen Schmelzeauslasskanäle geteilt ist.

Die JPH0339216A bezieht sich auf eine Spritzgießeinrichtung, ausgelegt als Mehrfach-Spritzgießwerkzeug mit Nadelverschlußanschnitt, wobei jedes Ventilteil bzw. jede Ventilnadel sich durch eine Hülse erstreckt, die in einer Öffnung aufgenommen ist, welche sich durch den Verteiler erstreckt. Die JPH0339216A zeigt eine rechtwinkelige Einmündung von Teilkanäle in einen zentralen Schmelzekanal.

Aus der US5795600A ist eine Schmelzekanalanordnung für ein Spritzgießsystem mit einer beheizten Düse, einem in der beheizten Düse axial verschiebbaren Ventilstift und einer Führungsbuchse für den Ventilstift, die sich in einen Verteiler und die beheizte Düse erstreckt, bekannt. Die Schmelzeleitungsanordnung umfasst eine Nut in der beheizten Düse, die sich zumindest teilweise um die Führungsbuchse herum erstreckt. Ein Schmelzedurchgang erstreckt sich zwischen der Nut und einem Schmelzedurchgang in einem Verteilerstück. Es ist eine 90° Anordnung der Teilkanäle bzw. deren Mittelachse zur Mittelachse vorgesehen.

Die EP2374595A1 zeigt ein Kunststoffeinspritzkanalsystem, das sich durch die Nadelverschlussdüse erstreckt. Der Einspritzkanal im Betätigungsabschnitt der Nadelverschlussdüse teilt sich in zwei Unterkanäle. Diese beiden Unterkanäle befinden sich auf gegenüberliegenden Seiten der Betätigungskammer und sind in der Wand, die die Betätigungskammer bildet, untergebracht. Im Düsenschacht laufen diese beiden Teilkanäle zusammen und münden in einem sehr spitzen Winkel in den Schmelzekanal ein.

CN201471689U zeigt einen mehrteilgen Aufbau eines Heißkanalsystems bei welchem ein Kanalteil und ein Kanalteil um die Nadel herumführen, diese erstrecken sich über mehrere Bauteile und münden in einem sehr spitzen Winkel in den zentralen Schmelzekanal ein.

In der EP3027379B1ist ein einstückig ausgeformter Schmelzeverteiler mit einem separaten, isolierten Kanal zur Aufnahme von Kühlflüssigkeit offenbart. Eine Teilung der Kanäle ist nicht offenbart. Bisher ist es jedoch noch nicht gelungen, eine Vorrichtung und ein Verfahren zur Verfügung zu stellen, mittels derer die zuvor beschriebenen Nachteile eines Nadelschattens auf effiziente und zufriedenstellende Art und Weise beseitigt oder zumindest reduziert werden können.

Aufgabe der vorliegenden Erfindung war es, die noch bestehenden Nachteile des Standes der Technik zu überwinden und ein Heißkanalwerkzeug, eine Spritzgussvorrichtung und ein Verfahren zur Herstellung eines Heißkanalwerkzeuges zur Verfügung zu stellen, mittels derer die Ausbildung eines Nadelschattens und die damit einhergehenden negativen Effekte verhindert oder zumindest vermindert werden. Insbesondere war es Aufgabe der Erfindung, Strömungs- oder Leistungsverluste im Verteiler zu vermindern, sowie die erforderliche Anzahl an Spülvorgängen bei Farb- und/oder Materialwechsel zu reduzieren und eine Materialdegradation bzw. einen thermischen Abbau der Schmelze zu vermindern.

Diese Aufgabe wird durch ein Heißkanalwerkzeug gemäß den Ansprüchen gelöst.

Die Erfindung betrifft ein Heißkanalwerkzeug zum Zuführen einer Schmelze zu einer Kavität, umfassend zumindest einen Kanal, welcher Kanal sich von einem Kanaleintritt zu einem Kanalaustritt erstreckt, und welcher Kanal in Strömungsrichtung betrachtet vor dem Kanalaustritt entlang einer Mittelachse verläuft. Natürlich kann es auch sein, dass das Heißkanalwerkzeug mit mehreren Kanalaustritten ausgebildet ist, sodass sich der Kanal von einem Kanaleintritt zu mehreren Kanalaustritten erstreckt. Alternativ oder zusätzlich wäre es auch denkbar, wenn das Heißkanalwerkzeug mit mehreren Kanaleintritten ausgebildet ist. Der Kanal ist in Strömungsrichtung betrachtet vor dem Kanalaustritt mit einer Nadelverschlussdüse koppelbar. Die Nadelverschlussdüse umfasst eine Ventilnadel, welche Ventilnadel entlang der Mittelachse verschiebbar ist. Der Kanal weist in Strömungsrichtung betrachtet vor dem Kanalaustritt und auf der Mittelachse eine Nadeldurchgangsöffnung auf, durch welche Nadeldurchgangsöffnung die Ventilnadel durchführbar ist. Dabei ist vorgesehen, dass der Kanal in Strömungsrichtung betrachtet vor der Nadeldurchgangsöffnung zumindest in einen ersten Teilkanal und einen zweiten Teilkanal geteilt ist, und dass der erste Teilkanal und der zweite Teilkanal in Strömungsrichtung betrachtet bei und/oder nach der Nadeldurchgangsöffnung wieder in einen Kanal zusammengeführt sind. Der erste Teilkanal und der zweite Teilkanal schließen mit der Mittelachse jeweils einen von 90° abweichenden ersten Winkel ein, wobei der erste Winkel (12) im Wesentlichen 45° beträgt.

Dieser erste Winkel ist dabei an jener Position zwischen erstem Teilkanal und Mittelachse angeordnet, wo der erste Teilkanal wieder in den Kanal zusammengeführt wird bzw. wo der erste Teilkanal wieder in den Kanal einmündet. Dasselbe gilt sinngemäß für den zweiten Teilkanal, wobei erste Winkel an jener Position zwischen zweiten Teilkanal und Mittelachse angeordnet ist, wo der zweite Teilkanal wieder in den Kanal zusammengeführt wird bzw. wo der zweite Teilkanal wieder in den Kanal einmündet.

Alternativ oder zusätzlich ist der erste Teilkanal in zumindest zwei weitere Teilkanäle geteilt und/oder der zweite Teilkanal ist in zumindest zwei weitere Teilkanäle geteilt. Die weiteren Teilkanäle sind in Strömungsrichtung betrachtet bei und/oder nach der Nadeldurchgangsöffnung wieder in einen Kanal zusammengeführt. Dabei schließen die weiteren Teilkanäle mit der Mittelachse jeweils einen von 90° abweichenden ersten Winkel ein.

Hier gilt ebenso, dass der erste Winkel an jener Position zwischen dem jeweiligen weiteren Teilkanal und Mittelachse angeordnet ist, wo der weitere Teilkanal wieder in den Kanal zusammengeführt wird bzw. wo der weitere Teilkanal wieder in den Kanal einmündet.

Im Kontext der Erfindung und dem Durchschnittsfachmann hinlänglich bekannt, betrifft der Begriff Heißkanalwerkzeug, Heißkanal, Heißkanalsystem oder Angusssystem einen beheizbaren Schmelzeverteilerblock. Mit dem Begriff Heißkanalwerkzeug kann aber natürlich auch lediglich ein Teilbereich oder Teilabschnitt eines gattungsgemäßen Schmelzeverteilerblocks gemeint sein.

Der Begriff Strömungsrichtung bezieht sich auf eine Richtung, in der sich eine Schmelze durch den Kanal bewegt oder bewegt wird, wobei die Strömungsrichtung der spezifischen Ausformung des Kanals folgt und damit auch wechseln kann. Dies insbesondere, wenn der Kanal nicht geradlinig ausgebildet ist, sondern mit Biegungen, Umlenkungen und dergleichen ausgebildet ist. Unter Strömungsrichtung ist damit die Fließrichtung der Schmelze vom Kanaleintritt zum Kanalaustritt gemeint.

Dem Durchschnittsfachmann ist bekannt, dass in einem Schmelze führenden Kanal bzw. Teilkanal nicht zwingend ausschließlich ein einer Hauptstromrichtung bzw. Strömungsrichtung folgendes, laminares Strömungsverhältnis herrscht, und dass Turbulenzen, beispielsweise infolge von Reibung an Kanalinnenwänden oder infolge von Knicken oder Richtungswechseln des Kanals / Teilkanals, auch zu von der Hauptstromrichtung abweichenden Strömungen führen können. Im Kontext der Erfindung ist mit dem ersten Winkel, sowie mit den im Folgenden beschriebenen weiteren Winkeln, ein Winkel gemeint, der zwischen einer Hauptstromrichtung der Schmelze bzw. eines Hauptstromes der Schmelze und einem weiteren räumlichen Bezug ausgebildet ist.

Bei Heißkanalwerkzeugen oder Spritzgussvorrichtungen, kann ein Anspritzpunkt mittels einer Nadelverschlussdüse verschlossen werden, wobei die Ventilnadel der Nadelverschlussdüse durch eine ansteuerbare Mechanik betätigt werden kann. Die Betätigung kann beispielsweise pneumatisch, hydraulisch, elektrisch oder auf jede andere Art, beispielsweise mittels Tellerfedern, erfolgen. Üblicherweise ist die Nadelverschlussdüse dazu mit einer steuerbaren bzw. regelbaren Betätigungsvorrichtung ausgebildet. Denkbar sind auch nicht steuerbare bzw. nicht regelbare Betätigungsvorrichtungen. Eine Betätigungsvorrichtung dient der Bewegung der Ventilnadel entlang der Mittelachse und kann einen Ventilnadelhalter mit einer Ventilnadel-Einstellvorrichtung umfassen. Ein Ventilnadelhalter dient der Halterung der Ventilnadel und ist mit der Betätigungsvorrichtung gekoppelt bzw. koppelbar. Eine Ventilnadel-Einstellvorrichtung dient der Feineinstellung der Ventilnadel, respektive der Betätigungsvorrichtung.

Sowohl die Nadelverschlussdüse, als auch das Heißkanalwerkzeug bzw. der Kanal sind üblicherweise beheizbar und werden auf ein Temperaturfenster eingestellt, in dem der Kunststoff plastisch verarbeitbar ist. Zur Temperaturregelung kann ein Heißkanalregelgerät vorgesehen sein, welches permanent Soll- und Ist-Temperatur abgleicht und regelt. Wie dem Fachmann an sich bekannt, kann es zudem zweckmäßig sein, wenn die Nadelverschlüssdüse, respektive die Betätigungsvorrichtung der Nadelverschlussdüse, zumindest bereichsweise oder abschnittsweise auch temperierbar, also kühl- und/oder beheizbar, ist.

Dem Durchschnittsfachmann ist dabei hinlänglich bekannt, dass ein Heißkanalsystem mehrere Kanäle bzw. mehrere Hauptkanäle umfassen kann, in welchen Kanälen die Schmelze jeweils zu einer Nadelverschlussdüse und deren jeweiligen Anspritzpunkt gefördert wird.

Die Erfindung hat den Vorteil, dass durch die spezielle geometrische Ausgestaltung der zumindest zwei Teilkanäle eine Bildung eines Nadelschattens verhindert, oder zumindest deutlich vermindert wird. Zur Reduktion eines Nadelschattens kann es dabei besonders vorteilhaft sein, wenn eine Anströmung der Ventilnadeln aus einer Vielzahl an Teilkanälen insbesondere aus unterschiedlichen Richtungen erfolgt. Infolgedessen werden Strömungs- oder Leistungsverluste aufgrund nicht idealer Strömungsverhältnisse reduziert, und somit ein eine energie- und kosteneffiziente Nutzung, respektive Produktion von Spritzgussteilen, ermöglicht. Darüber hinaus sind durch den verhinderten oder zumindest stark reduzierten Nadelschatten im Falle eines Farbwechsels und/oder eines Materialwechsels weniger Spülvorgänge erforderlich. Dies wirkt sich zusätzlich positiv auf eine Energiebilanz und Ressourcennutzung bei der Produktion von Spritzgussteilen aus. Darüber hinaus wird verhindert, dass sich degradiertes bzw. thermisch abgebautes Material in einem Nadelschattenbereich anstaut oder ansammelt, sodass es zu keiner Kontamination der frisch nachfließenden Schmelze mit etwaig degradiertem Material kommt. So kann ein Farbwechsel oder ein Materialwechsel schneller durchgeführt werden. Insbesondere kann verhindert werden, dass Verschmutzungen durch degradiertes Schmelzematerial oder durch angestaute Farbreste in das Spritzgussteil verschleppt werden. Solche Verschmutzungen zeigen sich in einem Spritzgussteil zumeist als linienförmige Kontaminationen. Vorteilhaft ist dabei auch die erfindungsgemäße Ausprägung, gemäß welcher der erste Winkel im Wesentlichen 45° beträgt.

Das hat den Vorteil, dass dadurch eine Anströmung ermöglicht wird, welche die Bildung eines Nadelschattens vermindert. Es hat sich gezeigt, dass durch diese Ausprägung ein guter, oder sogar ein idealer Kompromiss zwischen Ausnutzung des verfügbaren Platzes, guter Durchmischung und scherungsarmer Umlenkung erzielt werden kann.

Überraschenderweise kann durch die erfindungsgemäße Ausbildung auch die Lebensdauer der Ventilnadel erhöht werden, indem verhindert werden, dass die Ventilnadel verbogen oder beschädigt wird oder einer hohen abrasiven Belastung, respektive einem Verschleiß, ausgesetzt wird. Die erfindungsgemäße Ausführung der Teilkanäle bewirkt eine beträchtliche Reduktion der Kräfte die auf die Ventilnadel einwirken, sodass ein etwaiges Verbiegen oder Beschädigen der Ventilnadel infolge dieser Anströmkraft durch die den Schmelzestrom hintangehalten wird.

An dieser Stelle sei ausdrücklich erwähnt, dass der erste Winkel nicht so zu verstehen ist oder darauf beschränkt ist, dass dieser zwingend zwischen einem geradlinigen Kanalstück oder einem geradlinigen Teilkanalstück und der Mittelachse ausgebildet ist. Vielmehr ist es natürlich möglich, dass der Kanal oder die Teilkanäle abschnittsweise kreisförmig oder bogenförmig sind und damit bereichsweise einem Kreis oder Bogensegment folgen. So kann der erste Winkel natürlich ebenso zwischen einer gedachten Tangente eines Kreises oder Bogensegmentes und der Mittelachse ausgebildet sein. Es versteht sich von selbst, dass dies sinngemäß und gleichermaßen auch für die weiteren nachfolgend beschriebenen Winkel gilt. So können die Kanäle bzw. Teilkanäle auch zueinander durch ihre jeweiligen gedachten Tangenten über die weiteren Winkel in Beziehung stehen.

Darüber hinaus hat die erfindungsgemäße Ausbildung den Vorteil, dass ein Heißkanalwerkzeug im Vergleich zu bekannten Ausbildungen mit kleinen Baugrößen beziehungsweise platzsparend konstruiert werden kann. Ein erfindungsgemäß ausgeformtes Heißkanalwerkzeug ist im Betrieb besonders kostengünstig bzw. kosteneffizient, da zum Beheizen weniger Energieeinsatz erforderlich ist

Des Weiteren kann es zweckmäßig sein, wenn der erste Teilkanal und der zweite Teilkanal mit der Mittelachse denselben ersten Winkel einschließen. Alternativ oder zusätzlich können die weiteren Teilkanäle mit der Mittelachse denselben ersten Winkel einschließen.

Das hat den Vorteil, dass dadurch eine symmetrische Anströmung ermöglicht wird, welche die Bildung eines Nadelschattens vermindert. Zudem kann ein derart ausgeformtes Heißkanalwerkzeug auch kostengünstig hergestellt werden. Durch diese Ausbildung werden die auf die Ventilnadel durch den Schmelzestrom einwirkenden Kräfte weiter reduziert. Dadurch kann eine etwaige Beschädigung oder Verbiegung der Ventilnadel weiter verhindert werden, und somit die Lebensdauer derselben erhöht werden. Insbesondere können hierdurch gezielt Turbulenzen generiert werden, welche eine bessere Durchmischung ermöglichen, sodass es in Strömungsrichtung gesehen hinter der Ventilnadel zu keinem Materialstau kommt. So kann ein etwaiger Farbwechsel oder ein Materialwechsel schneller durchgeführt werden. Insbesondere kann verhindert werden, dass Verschmutzungen durch degradiertes Schmelzematerial oder durch angestaute Farbreste in das Spritzgussteil verschleppt werden.

Ferner kann vorgesehen sein, dass der erste Teilkanal und der zweite Teilkanal mit der Mittelachse jeweils einen unterschiedlichen ersten Winkel einschließen. Alternativ oder zusätzlich können die weiteren Teilkanäle mit der Mittelachse jeweils einen unterschiedlichen ersten Winkel einschließen.

Das hat den Vorteil, dass dadurch eine Anströmung ermöglicht wird, welche die Bildung eines Nadelschattens vermindert. Insbesondere können hierdurch gezielt Turbulenzen generiert werden, welche eine bessere Durchmischung ermöglichen, sodass es in Strömungsrichtung gesehen hinter der Ventilnadel zu keinem Materialstau kommt. So kann ein Farbwechsel oder ein Materialwechsel schneller durchgeführt werden. Insbesondere kann verhindert werden, dass Verschmutzungen durch degradiertes Schmelzematerial oder durch angestaute Farbreste in das Spritzgussteil verschleppt werden. Darüber hinaus werden durch diese Ausbildung die auf die Ventilnadel durch den Schmelzestrom einwirkenden Kräfte weiter reduziert. Dadurch kann eine etwaige Beschädigung oder Verbiegung der Ventilnadel weiter verhindert werden, und somit die Lebensdauer derselben erhöht werden.

Das hat den Vorteil, dass dadurch eine Anströmung ermöglicht wird, welche die Bildung eines Nadelschattens vermindert. So wird eine gute Durchmischung erzielt, was besonders bei Farbwechseln oder bei Materialwechseln vorteilhaft sei kann. Je nachdem, welches Material bzw. welcher Kunststoff verarbeitet wird, kann der erste Winkel entsprechend gewählt werden, sodass den Anforderungen des jeweiligen Materials genüge getan wird. Beispielsweise kann es zweckmäßig sein, beim Einsatz von scherempfindlichem Material vergleichsweise sanftere bzw. weniger starke Umlenkungen, insbesondere stumpfe Winkel, zu wählen. Gemäß einer Weiterbildung ist es möglich, dass der erste Teilkanal und der zweite Teilkanal in einem zweiten Winkel von 20° bis 270°, bevorzugt von 20° bis 180° zueinander auseinanderlaufen, und/oder dass die weiteren Teilkanäle in einem zweiten Winkel von 20° bis 270°, bevorzugt von 20° bis 180°, zueinander auseinanderlaufen.

Bevorzugt laufen die Teilkanäle symmetrisch auseinander. Durch die angegebenen Winkelbereiche kann eine schonende Masseführung realisiert werden, bei welcher die im Kanal bzw. im Teilkanal geführte Schmelze möglichst geringen mechanischen Belastungen / Scherkräften ausgesetzt wird. Der zweite Winkel kann vorteilhafterweise dem verfügbaren Platz angepasst werden. Gegebenenfalls können auch Winkel über 180° zweckmäßig sein. Ein sehr spitzer Teilungswinkel kleiner als 20° kann im Teilungsbereich zur Ausbildung einer unvorteilhaft scharfen Kante bzw. einer Messerkante führen, was vermieden werden soll. Dies deshalb, weil durch die Anströmung einer Messerkante auf die Schmelze wirkende Scherkräfte entstehen können, durch welche es zu einer Materialschädigung, respektive zu einer mechanischen Beschädigung der Polymerketten kommen kann.

Es kann auch von Vorteil sein, wenn der erste Teilkanal und der zweite Teilkanal in einem dritten Winkel von 90° bis 180° zueinander zusammenlaufen. Alternativ oder zusätzlich kann es auch von Vorteil sein, wenn die weiteren Teilkanäle in einem dritten Winkel von 90° bis 180° zueinander zusammenlaufen.

Ferner kann es zweckmäßig sein, wenn der Kanal zumindest abschnittsweise in einer Ebene angeordnet ist, und dass der erste Teilkanal und der zweite Teilkanal zumindest im Wesentlichen in der Ebene angeordnet sind.

Das hat den Vorteil, dass dadurch eine Anströmung ermöglicht wird, welche die Bildung eines Nadelschattens vermindert. Dabei kann es zweckmäßig sein, wenn die Mittelachse im rechten Winkel oder zumindest im Wesentlichen im rechten Winkel zu der Ebene ausgerichtet ist.

Darüber hinaus kann vorgesehen sein, dass der Kanal zumindest abschnittsweise in einer Ebene angeordnet ist, und dass der erste Teilkanal und der zweite Teilkanal mit der Ebene jeweils einen vierten Winkel einschließen und/oder dass der erste Teilkanal und der zweite Teilkanal parallel zur Ebene verlaufen.

Bevorzugt beträgt der vierte Winkel von 135° bis 270°, bevorzugt von 90° bis 225°. Das hat den Vorteil, dass dadurch eine Anströmung ermöglicht wird, welche die Bildung eines Nadelschattens vermindert. Auch hierbei kann es zweckmäßig sein, wenn die Mittelachse im rechten Winkel oder zumindest im Wesentlichen im rechten Winkel zu der Ebene ausgerichtet ist.

Gemäß einer besonderen Ausprägung ist es möglich, dass der erste Teilkanal und der zweite Teilkanal im Wesentlichen symmetrisch wieder in einen Kanal zusammengeführt sind. Alternativ oder zusätzlich kann es auch vorteilhaft sein, wenn die weiteren Teilkanäle im Wesentlichen symmetrisch wieder in einen Kanal zusammengeführt sind.

Das hat den Vorteil, dass dadurch eine Anströmung ermöglicht wird, welche die Bildung eines Nadelschattens vermindert. Ein symmetrischer Aufbau hat sich als besonders vorteilhaft erweisen, um die Ausbildung eines Nadelschattens zu verhindern, weil hierdurch Bereiche mit geringen Fließgeschwindigkeiten bzw. Bereiche mit Fließgeschwindigkeiten von 0 m/s oder annähernd 0 m/s so verhindert oder sehr klein gehalten werden können. Zudem werden dabei die auf die Schmelze wirkenden Scherkräfte möglichst gering gehalten.

Die zwei Teilkanäle oder die weiteren Teilkanäle können beispielsweise in einem dritten Winkel von im Wesentlichen 180° zusammenlaufen bzw. aufeinandertreffen. Wenn der Kanal in drei Teilkanäle / weitere Teilkanäle auseinanderläuft, können diese beispielsweise in einem dritten Winkel von im Wesentlichen 120° zusammenlaufen bzw. aufeinandertreffen. Wenn der Kanal in vier Teilkanäle / weitere Teilkanäle auseinanderläuft, können diese beispielsweise in einem dritten Winkel von im Wesentlichen 90° zusammenlaufen bzw. aufeinandertreffen.

Entsprechend einer vorteilhaften Weiterbildung kann vorgesehen sein, dass das Heißkanalwerkzeug zumindest einen mittels eines additiven Fertigungsverfahrens hergestellten Abschnitt umfasst.

Es kann auch sein, dass das gesamte Heißkanalwerkzeug, insbesondere wenn diese einteilig ausgebildet ist, mittels eines additiven Fertigungsverfahren hergestellt ist. Eine additive Fertigung hat den Vorteil, dass der jeweilige Abschnitt oder des gesamte Heißkanalwerkzeug mit speziellen geometrischen Ausformungen bzw. Ausgestaltungen fertigbar ist, welche mit herkömmlichen Fertigungsverfahren nicht oder nur aufwändig realisierbaren sind. Im Gegensatz zu herkömmlichen Fertigungsverfahren, wie beispielsweise Fräsen, Drehen und dergleichen, ermöglicht ein additives Fertigungsverfahren auch eine vergleichsweise komplexe Ausbildung der Kanäle. Vor allem in kleinen Bauräumen kann mittels additiver Fertigungsverfahren eine dreidimensionale Ausbildung der Kanäle umgesetzt werden, welche ansonsten gar nicht möglich wäre. Dadurch können Heißkanalwerkzeuge mit kleinen Baugrößen realisiert werden. Vergleichsweise kleine Heißkanalwerkzeuge sind im Betrieb besonders kostengünstig bzw. kosteneffizient, da zum Beheizen weniger Energieeinsatz erforderlich ist.

Bei dem additiven Fertigungsverfahren kann es sich um ein direktes Fertigungsverfahren handeln, beispielsweise um ein 3D-Metalldruckverfahren. Es ist aber auch denkbar, dass es sich bei dem additiven Fertigungsverfahren um ein indirektes Fertigungsverfahren handelt, beispielsweise um ein 3D-Metallsinterverfahren, bei welchem das Heißkanalwerkzeug oder ein Abschnitt des Heißkanalwerkzeugs indirekt über einen sogenannten Grünling und einen nachfolgenden Sinterprozess hergestellt wird. Grundsätzlich sind sämtliche im Stand der Technik bekannten additiven Fertigungsverfahren denkbar.

Werkstoffe, respektive Metallwerkstoffe, die in einem solchen additiven Fertigungsverfahren eingesetzt werden, sind - um nur exemplarisch einige Beispiele zu nennen - beispielsweise von der Firma EOS unter der Materialbezeichnung "EOS MS1" und "EOS StainlessSteel CX" erhältlich. Zudem ist der Einsatz von Edelstählen mit der Werkstoffnummer mit der 1.2709 (X3NiCoMoTi18-9-5), 1.4404 (X2CrNiMo17-12-2), sowie 1.4509 (X2CrTiNb18) denkbar und gegebenenfalls vorteilhaft.

Insbesondere kann es vorteilhaft sein, wenn der mittels eines additiven Fertigungsverfahrens hergestellte Abschnitt jenen Bereich umfasst, in dem der erste Teilkanal und der zweite Teilkanal angeordnet sind und/oder in dem die weiteren Teilkanäle angeordnet sind.

Das hat den Vorteil, dass damit auch eine vergleichsweise komplexe Kanalführung realisierbar ist, welche mit herkömmlichen Fertigungsverfahren nicht oder nicht auf zufriedenstellende bzw. ausreichend funktionserfüllende Art und Weise realisierbar ist. Insbesondere, wenn lediglich der die Teilkanäle umfassende Abschnitt mittels eines additiven Fertigungsverfahrens hergestellt ist und der restliche Abschnitt, welcher mit einer vergleichsweise weniger komplexen Kanalführung ausgebildet ist mit herkömmlichen Fertigungsverfahren hergestellt ist, kann ein Heißkanalwerkzeug bereitgestellt werden, welches kostenoptimiert ist und zugleich die beschriebenen Nachteile eines Nadelschattens minimiert sind.

Beispielsweise kann das Heißkanalwerkzeug einen zentralen Abschnitt umfassen, welcher mittels eines herkömmlichen Fertigungsverfahrens hergestellt ist und einen oder mehrere, beispielsweise zwei, Abschnitte aufweisen, welche mittels eines additiven Fertigungsverfahrens hergestellt sind. Diese beiden Abschnitte können dabei jeweils seitlich am zentralen Abschnitt angeordnet oder angeflanscht sein. Bevorzugt ist jeder der beiden seitlich angeordneten Abschnitte jeweils umfassend Teilkanäle auch jeweils mit einer Nadelverschlussdüse ausgebildet.

Vorteilhaft ist auch, wenn das Heißkanalwerkzeug mehrteilig und aus mehreren jeweils integralen Bauteilen ausgeführt ist, wobei zwei oder mehr mittels eines additiven Fertigungsverfahrens hergestellte Komponenten verbunden bzw. gekoppelt werden. Additive Fertigungsverfahren sind bekanntlich im Hinblick auf eine maximale Bauteilgröße limitiert. Indem mehrere Blöcke bzw. Bauteile separat gefertigt und danach zusammengeführt werden, beispielsweise mittels eines Sinterprozesses, können auch große Heißkanalwerkzeuge realisiert werden.

Insbesondere kann ein Heißkanalwerkzeug, respektive können Abschnitte eines Heißkanalwerkzeugs auch zweiteilig ausgeführt sein, sodass das Heißkanalwerkzeug oder einzelne Abschnitte quasi aus zwei, gegebenenfalls symmetrischen Halbschalen bzw. Halbelementen zusammensetzbar sind. Dabei ist sowohl eine vertikale, als auch eine horizontale Teilung oder Zweiteilung des Heißkanalwerkzeuges oder Abschnitte des Heißkanalwerkzeuges denkbar.

Ferner kann vorgesehen sein, dass das Heißkanalwerkzeug einteilig ist. Mit dem Begriff einteilig ist gemeint, dass das Heißkanalwerkzeug integral geformt ist, also nicht einstückig ist und damit nicht aus mehreren Teilen besteht.

Diese einteilige Ausbildung ist insbesondere vorteilhaft, wenn das Heißkanalwerkzeug mittels eines additiven Fertigungsverfahren hergestellt ist. Eine einteilige Ausführung hat zudem generell den Vorteil, dass ein einteiliges Heißkanalwerkzeug besonders langlebig, respektive über lange Zeit hinweg leckagefrei, sein kann.

Darüber hinaus kann vorgesehen sein, dass der zumindest eine Kanal und/oder der erste Teilkanal und der zweite Teilkanal durch Strömungsschleifen bearbeitet ist.. Alternativ oder zusätzlich kann es sein, dass der zumindest eine Kanal durch ein nasschemisches, elektrochemisches oder durch eine Kombination mehrerer Bearbeitungsverfahren, bearbeitet ist.

Dies insbesondere, wenn das Heißkanalwerkzeug durch ein additives Fertigungsverfahren hergestellt ist. Das hat den Vorteil, dass eine besonders glatte Oberfläche gewährleistet werden kann, welche sich positiv auf das Strömungsverhalten der Schmelze auswirkt. Bevorzugt weist der Kanal eine Rauheit von maximal Rz 4, besonders bevorzugt von maximal Rz 3 auf. Indem Turbulenzen in der Strömung zumindest vermindert werden, kann eine Bildung eines Nadelschattens und den damit einhergehenden Nachteilen, zusätzlich verhindert werden. Zudem können Materialablagerungen bzw. Materialanhaftungen und schlecht durchspülte Bereiche verhindert oder zumindest vermindert werden.

Alternativ oder zusätzlich wäre es auch denkbar, wenn der oder die Kanäle oder Teilkanäle mit einer Beschichtung ausgebildet sind, sodass eine glatte Oberfläche, bevorzugt von maximal Rz 4, besonders bevorzugt von maximal Rz 3, ermöglicht ist. Anstatt oder zusätzlich zu einer Beschichtung kann auch eine andere Oberflächenbehandlung der Kanäle oder Teilkanäle erfolgen. Eine Behandlung der Oberfläche kann zudem die Verschleißfestigkeit, Chemikalienbeständigkeit und Korrosionsbeständigkeit der Kanäle und Teilkanäle verbessern.

Vorteilhaft ist auch eine Ausprägung, gemäß welcher vorgesehen sein kann, dass der erste Teilkanal und der zweite Teilkanal im Wesentlichen denselben Strömungsquerschnitt aufweisen. Alternativ oder zusätzlich kann es auch vorteilhaft sein, wenn die weiteren Teilkanäle im Wesentlichen denselben Strömungsquerschnitt aufweisen.

Das hat den Vorteil, dass sich etwaige Druckschwankungen oder Druckveränderungen infolge der Kanalteilung(en) nicht nachteilig auf die Strömungsverhältnisse auswirken. Eine symmetrische Bauart kann zudem im Hinblick auf die Herstellungskosten vorteilhaft sein. Wie bereits obenstehend erläutert, kann eine symmetrische Anspülung der Nadel vorteilhaft sein, um eine Überbelastung bzw. ein Verbiegen der Ventilnadel zu verhindern oder zu vermindern. Darüber hinaus kann vermieden werden, dass es in schlecht oder weniger durchspülten Bereichen zu Materialstau oder zu Materialablagerungen kommt.

Insbesondere sind auch stark verzweigte oder verwinkelte Kanalführungen, mit mehr oder weniger stark ausgeprägten Richtungsänderungen der Kanäle und Teilkanäle denkbar. Grundsätzlich kann es auch sein, dass das Heißkanalwerkzeug zusätzlich zu einer oder mehreren Nadelverschlussdüsen auch noch andere Düsenbauarten umfasst. Dies kann je nach Anwendungsgebiet zweckmäßig sein und liegt im Ermessen des Durchschnittsfachmanns. Es ist auch denkbar und gegebenenfalls zweckmäßig, dass das Heißkanalwerkzeug mehrere Kanäle umfasst, die sich von einem Kanaleintritt zu einem Kanalaustritt erstrecken, wobei die Kanäle nicht zwingend miteinander strömungsverbunden sind.

Die Aufgabe wird auch durch eine Spritzgussvorrichtung umfassend ein Heißkanalwerkzeug gelöst, wobei das Heißkanalwerkzeug gemäß den Ansprüchen, respektive gemäß den voranstehenden Beschreibungsteilen, ausgebildet sein kann.

Wie eingangs erläutert, wird unter dem Begriff Spritzgussvorrichtung bzw. Spritzgießmaschine eine Vorrichtung zum maschinellen Spritzgießen von Schmelzen, insbesondere von Thermoplasten, verstanden. Dem Durchschnittsfachmann sind die wesentlichen baulichen Komponenten grundsätzlich hinlänglich bekannt, weshalb auf diese hier und im Folgenden nicht näher eingegangen wird.

Das hat den Vorteil, dass durch die spezielle geometrische Ausgestaltung der zumindest zwei Teilkanäle eine Bildung eines Nadelschattens verhindert, oder zumindest deutlich vermindert wird. Infolgedessen werden Leistungsverluste infolge nicht idealer Strömungsverhältnisse reduziert, und somit eine energie- und kosteneffiziente Nutzung ermöglicht. Darüber hinaus sind durch den verhinderten oder zumindest stark reduzierten Nadelschatten im Falle eines Farbwechsels und/oder eines Materialwechsels weniger Spülvorgänge erforderlich. Dies wirkt sich zusätzlich positiv auf eine Energiebilanz und Ressourcennutzung aus. Insbesondere können durch die erfindungsgemäße Ausbildung der Spritzgussvorrichtung kleine Baugrößen realisiert werden, sodass ein Energiebedarf zum Beheizen geringgehalten werden kann. Wie bereits in den vorstehenden Beschreibungsteilen angeführt, kann durch die strömungsoptimierte Ausformung und Teilung des Kanals in die Teilkanäle, sowie durch die zwei- oder mehrseitige, bzw. auf den Ventilnadelumfang verteilte Anströmung der Ventilnadel, ein Nadelschatten reduziert oder gar eliminiert werden.

Die Aufgabe wird auch durch ein Verfahren zur Herstellung eines Heißkanalwerkzeuges, insbesondere eines Heißkanalwerkzeugs nach einem der Ansprüche, gelöst. Dabei ist vorgesehen, dass das das Heißkanalwerkzeug oder zumindest ein Abschnitt des Heißkanalwerkzeugs mittels eines additiven Fertigungsverfahrens hergestellt wird.

Das hat den Vorteil, dass das Verfahren die Herstellung eines Heißkanalwerkzeuges mit der bereits eingehend beschriebenen speziellen geometrische Ausgestaltung der Teilkanäle zur Reduktion der Bildung eines Nadelschattens ermöglicht. Mittels eines derart hergestellten Heißkanalwerkzeugs werden Leistungsverluste infolge nicht idealer Strömungsverhältnisse reduziert, und somit eine energie- und kosteneffiziente Nutzung ermöglicht. Darüber hinaus sind durch den verhinderten oder zumindest stark reduzierten Nadelschatten im Falle eines Farbwechsels und/oder eines Materialwechsels weniger Spülvorgänge erforderlich. Dies wirkt sich zusätzlich positiv auf eine Energiebilanz und Ressourcennutzung aus.

Es kann sein, dass das gesamte Heißkanalwerkzeug, insbesondere wenn diese einteilig ausgebildet ist, mittels eines additiven Fertigungsverfahren hergestellt ist. Eine additive Fertigung hat den Vorteil, dass der jeweilige Abschnitt oder des gesamte Heißkanalwerkzeug überaus präzise fertigbar ist, und dass die spezielle geometrische Ausformung bzw. Ausgestaltung präzise und auf qualitativ hochwertige Art und Weise realisierbar ist. Im Gegensatz zu herkömmlichen Fertigungsverfahren, wie beispielsweise Fräsen, Drehen und dergleichen, ermöglicht ein additives Fertigungsverfahren auch eine vergleichsweise komplexe Ausbildung der Kanäle.

Bei dem additiven Fertigungsverfahren kann es sich um ein direktes Fertigungsverfahren handeln, beispielsweise um ein 3D-Metalldruckverfahren. Es ist aber auch denkbar, dass es sich bei dem additiven Fertigungsverfahren um ein indirektes Fertigungsverfahren handelt, beispielsweise um ein 3D-Metallsinterverfahren, bei welchem das Heißkanalwerkzeug oder ein Abschnitt des Heißkanalwerkzeugs indirekt über einen sogenannten Grünling und einen nachfolgenden Sinterprozess hergestellt wird.

Werkstoffe, respektive Metallwerkstoffe, die in einem solchen additiven Fertigungsverfahren eingesetzt werden, sind beispielsweise von der Firma EOS unter der Materialbezeichnung "EOS MS1" und "EOS StainlessSteel CX" erhältlich. Zudem ist der Einsatz von Edelstählen mit der Werkstoffnummer mit der 1.2709 (X3NiCoMoTi18-9-5), 1.4404 (X2CrNiMo17-12-2), sowie 1.4509 (X2CrTiNb18) denkbar und gegebenenfalls vorteilhaft.

Insbesondere kann es vorteilhaft sein, wenn der mittels eines additiven Fertigungsverfahrens hergestellte Abschnitt jenen Bereich umfasst, in dem der erste Teilkanal und der zweite Teilkanal angeordnet sind.

Das hat den Vorteil, dass damit auch eine vergleichsweise komplexe Kanalführung realisierbar ist, welche mit herkömmlichen Fertigungsverfahren nicht oder nicht auf zufriedenstellende Art und Weise realisierbar ist.

Darüber hinaus kann vorgesehen sein, dass das additive Fertigungsverfahren mittels eines 3D-Metallsinterverfahrens oder eines 3D Metalldruckverfahrens durchgeführt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine dreidimensionale Darstellung eines Ausführungsbeispiels eines Heißkanalwerkzeugs 1;
- Fig. 2: eine dreidimensionale Detailansicht eines Heißkanalwerkzeugs 1 mit Nadelschatten gemäß dem Stand der Technik;
- Fig. 3: eine dreidimensionale Detailansicht eines Heißkanalwerkzeugs 1;
- Fig. 4: eine weitere dreidimensionale Detailansicht eines Heißkanalwerkzeugs 1;
- Fig. 5: eine Seitenansicht des Heißkanalwerkzeugs 1 aus der Fig. 3;
- Fig. 6: eine Seitenansicht des Heißkanalwerkzeugs 1 aus der Fig. 4;
- Fig. 7: eine Frontansicht des Heißkanalwerkzeugs 1 aus der Fig. 3;
- Fig. 8: eine Frontansicht des Heißkanalwerkzeugs 1 aus der Fig. 4;
- Fig. 9: eine Draufsicht auf das Heißkanalwerkzeug 1 aus der Fig. 3;
- Fig. 10: eine Draufsicht auf das Heißkanalwerkzeug 1 aus der Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Um unnötige Wiederholungen zu vermeiden, werden die Figuren bzw. die darin gezeigten Ausführungsbeispiele weitgehend in einer Zusammenschau beschrieben. Auf Besonderheiten einzelner Darstellung bzw. Ausführungen wird dabei gesondert verwiesen. In allen Figuren werden für gleiche Teile gleiche Bezugszeichen bzw. Bauteilbezeichnungen verwendet.

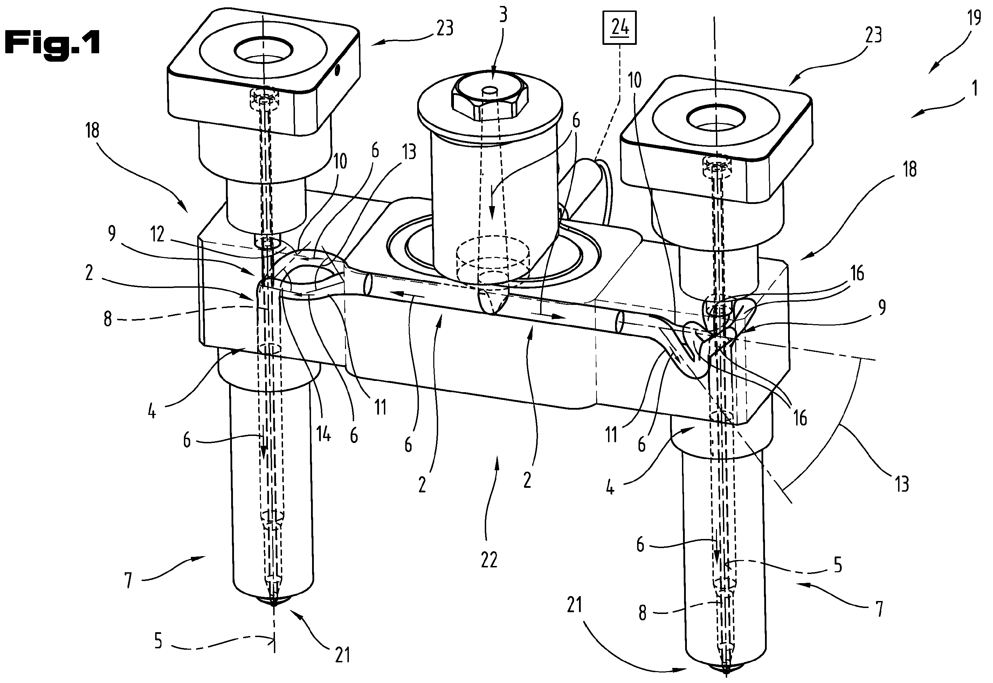

In der Fig. 1 ist eine dreidimensionale Darstellung eines Ausführungsbeispiels eines Heißkanalwerkzeugs 1 gezeigt. Das dargestellte Heißkanalwerkzeug 1 kann in einer Spritzgussvorrichtung 19 eingesetzt werden bzw. funktionaler oder baulicher Bestandteil einer solchen sein.

Das Heißkanalwerkzeug 1 zum Zuführen einer Schmelze zu einer Kavität umfasst zumindest einen Kanal 2, welcher sich von einem Kanaleintritt 3 zu einem Kanalaustritt 4 erstreckt. Durch den Kanal kann eine Schmelze, insbesondere eine Kunststoffschmelze, in Richtung eines Anspritzpunktes 21 und in weiterer Folge in Richtung einer Kavität bzw. eines Formnestes gefördert werden. Der Kanal 2 verläuft in Strömungsrichtung 6 betrachtet vor dem Kanalaustritt 4 entlang einer Mittelachse 5. Die Strömungsrichtung 6 ist dabei mittels Pfeilen dargestellt. In einer Einbausituation in einer Spritzgussvorrichtung 19 gemäß der Fig. 1 können die Mittelachse 5 sowie der Kanal 2 im Bereich vor dem Kanalaustritt 4 im Wesentlichen entlang einer Vertikalen ausgerichtet sein. Die tatsächliche Einbaulage hängt jedoch vom Anwendungsfall bzw. von der speziellen technischen Ausgestaltung der Spritzgussvorrichtung 19 ab. Der Kanal 2 ist in Strömungsrichtung 6 betrachtet vor dem Kanalaustritt 4 mit einer Nadelverschlussdüse 7 koppelbar. Eine Koppelung kann beispielsweise mittels einer Schraubverbindung erfolgen. Es ist aber auch denkbar, dass die Koppelung quasi "schwimmend" erfolgt, wobei die Komponenten durch Aufbringen einer gewissen Vorspannung zusammengehalten sind. In dem in der Fig. 1 gezeigten Ausführungsbeispiel ist der Kanal 2 zweigeteilt, sodass auch insgesamt zwei Nadelverschlussdüsen 7 bzw. insgesamt zwei Anspritzpunkte 21 ausgebildet sind. Dem Durchschnittsfachmann ist klar, dass diese Darstellung lediglich beispielhaft ist, wobei es in seinem Können liegt, das Heißkanalwerkzeug 1 mit der erforderlichen Anzahl an Anspritzpunkten 21 auszulegen. Die Nadelverschlussdüsen 7 umfassen jeweils eine Ventilnadel 8, welche entlang der Mittelachse 5 verschiebbar ist, sodass ein Anspritzpunkt 21 je nach Lage der Ventilnadel 8 durch diese öffenbar und auch verschließbar ist. In Strömungsrichtung 6 betrachtet vor dem Kanalaustritt 4 und auf der Mittelachse 5 weist der Kanal 2 eine Nadeldurchgangsöffnung 9 auf, durch welche Nadeldurchgangsöffnung 9 die jeweilige Ventilnadel 8 durchführbar ist.

Der Anspritzpunkt 21 der jeweiligen Nadelverschlussdüse 7 kann mittels der Ventilnadel 8 verschlossen werden, wobei die Ventilnadel 8 der Nadelverschlussdüse 7 durch eine ansteuerbare Mechanik betätigt werden kann. Die Betätigung kann beispielsweise pneumatisch, hydraulisch oder auch elektrisch erfolgen. Üblicherweise ist die Nadelverschlussdüse dazu mit einer steuerbaren bzw. regelbaren Betätigungsvorrichtung 23 ausgebildet. Eine Betätigungsvorrichtung 23 kann eine Ventilnadel-Einstellvorrichtung und einen Ventilnadelhalter umfassen, welcher die Ventilnadel hält.

Sowohl die Nadelverschlussdüse 7, als auch der Kanal 2 werden auf ein Temperaturfenster eingestellt, in dem der Kunststoff plastisch ist. Zur Temperaturregelung kann ein Heißkanalregelgerät 24 vorgesehen sein, welches permanent Soll- und Ist-Temperatur abgleicht und regelt.

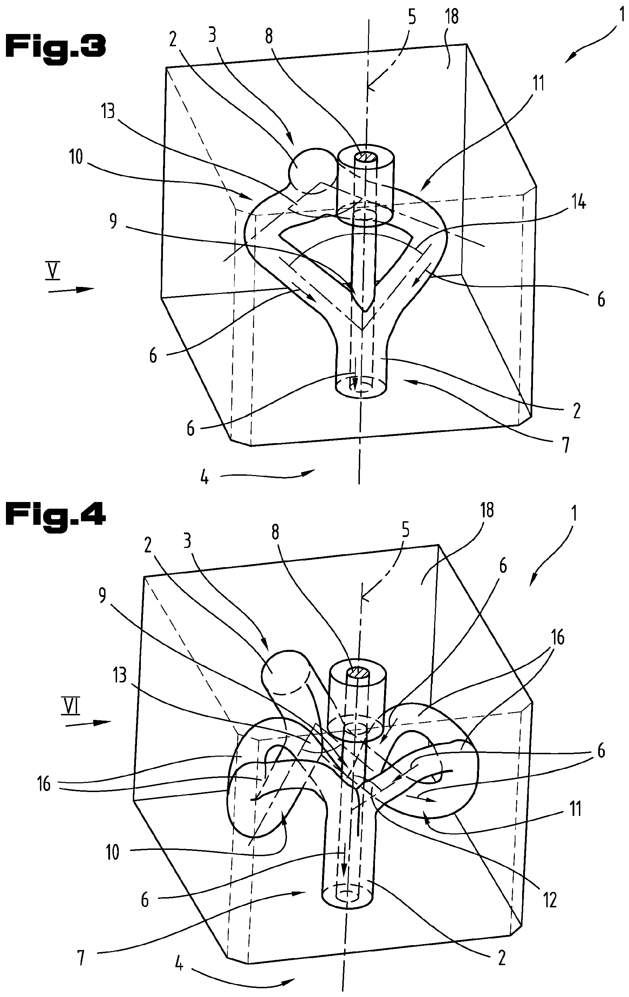

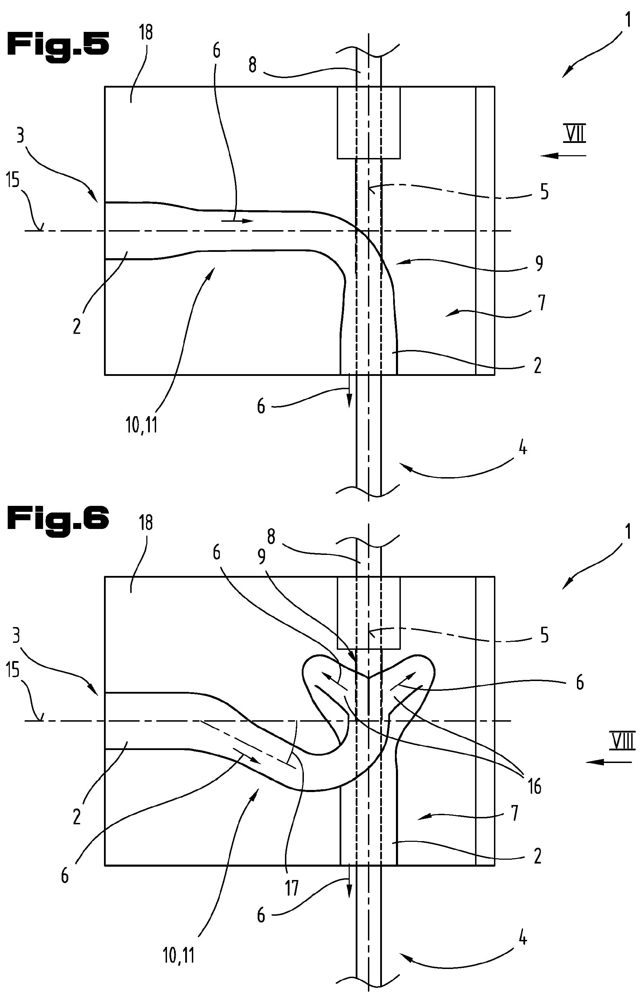

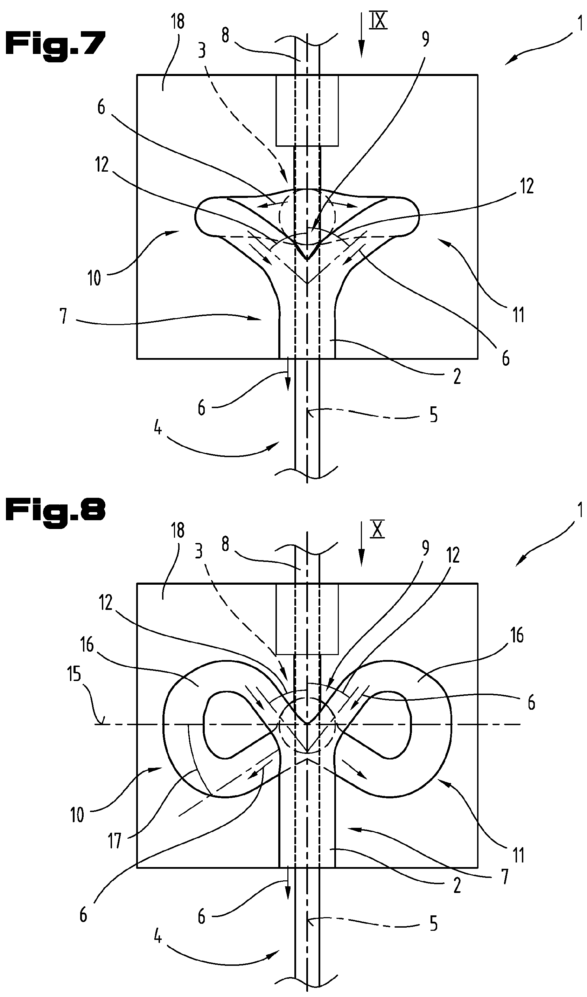

Es ist vorgesehen, dass der Kanal 2 in Strömungsrichtung 6 betrachtet vor der Nadeldurchgangsöffnung 9 zumindest in einen ersten Teilkanal 10 und einen zweiten Teilkanal 11 geteilt ist. Der erste Teilkanal 10 und der zweite Teilkanal 11 sind in Strömungsrichtung 6 betrachtet bei und/oder nach der Nadeldurchgangsöffnung 9 wieder in einen Kanal 2 zusammengeführt. Dabei schließen der erste Teilkanal 10 und der zweite Teilkanal 11 mit der Mittelachse 5 jeweils einen von 90° abweichenden ersten Winkel 12 ein. Dies ist in der Fig. 1 im linken Abschnitt, sowie in den Fig. 3, 5 und insbesondere in der Fig. 7 gezeigt.

Zusätzlich ist in der Fig. 1 gezeigt, dass der erste Teilkanal 10 in zumindest zwei weitere Teilkanäle 16 geteilt ist und dass der zweite Teilkanal 11 in zumindest zwei weitere Teilkanäle 16 geteilt ist, und dass die weiteren - gemäß dem Ausführungsbeispiel insgesamt vier - Teilkanäle 16 in Strömungsrichtung 6 betrachtet bei und/oder nach der Nadeldurchgangsöffnung 9 wieder in einen Kanal 2 zusammengeführt sind. Dabei schließen die weiteren Teilkanäle 16 mit der Mittelachse 5 jeweils einen von 90° abweichenden ersten Winkel 12 ein. Dies ist in der Fig. 1 im rechten Abschnitt, sowie in den Fig. 4, 6 und insbesondere in der Fig. 8 gezeigt.

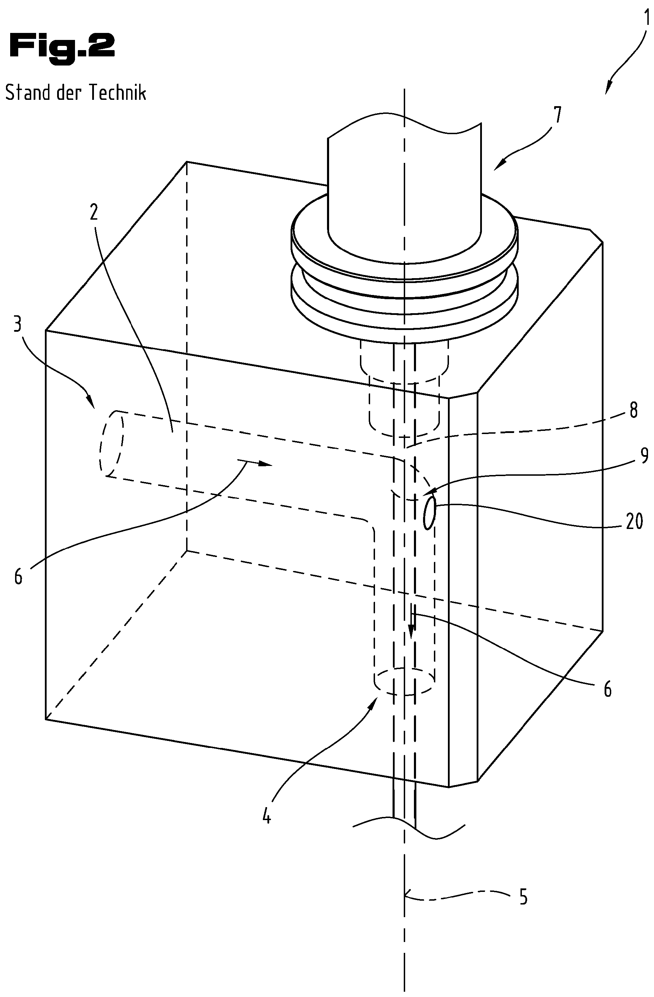

In der Fig. 2 ist in einer dreidimensionalen Detailansicht ein Heißkanalwerkzeug 1 gemäß dem Stand der Technik gezeigt und auch die damit verbundenen Problematik der Bildung eines Nadelschattens 20 anschaulich dargestellt. Die Fig. 2 zeigt einen Kanal 2, welcher in Strömungsrichtung 6 betrachtet vor dem Kanalaustritt 4 entlang einer Mittelachse 5 verläuft, und welcher in Strömungsrichtung 6 betrachtet vor dem Kanalaustritt 4 mit einer Nadelverschlussdüse 7 gekoppelt ist. Die Nadelverschlussdüse 7 umfasst eine Ventilnadel 8, welche entlang der Mittelachse 5 verschiebbar ist. Der Kanal 2 weist in Strömungsrichtung 6 betrachtet vor dem Kanalaustritt 4 und auf der Mittelachse 5 eine Nadeldurchgangsöffnung 9 auf, durch welche die Ventilnadel durchgeführt ist. Ein Nadelschatten 20 bzw. eine Totzone ist mittels einer Schattierung an der Innenwand des Kanals 2 dargestellt. Die Zone, in welcher es zur Ausbildung eines Nadelschattens 20 kommt, ist dabei gemäß dem Beispiel in der Fig. 2 hinter der Ventilnadel 8 gezeigt. In diesem Bereich des Nadelschattens 20 wir eine in dem Kanal 2 geführte Schmelze verlangsamt und eingefangen, sodass es zur Bildung von Turbulenzen kommt.

Der erste Teilkanal 10 und der zweite Teilkanal 11 können mit der Mittelachse 5 denselben ersten Winkel 12 einschließen. Zudem können die weiteren Teilkanäle 16 mit der Mittelachse 5 denselben ersten Winkel 12 einschließen. Dies ist in der Fig. 1 und im Detail auch in den Fig. 3-10 gezeigt.

Alternativ und nicht figürlich gezeigt können der erste Teilkanal 10 und der zweite Teilkanal 11 mit der Mittelachse 5 jeweils einen unterschiedlichen ersten Winkel 12 einschließen. Alternativ bzw. zusätzlich und ebenso nicht figürlich gezeigt können die weiteren Teilkanäle 16 mit der Mittelachse 5 jeweils einen unterschiedlichen ersten Winkel 12 einschließen.

Erfindungsgemäß beträgt der erste Winkel 12 im Wesentlichen 45°. Ein spitzer erster Winkel 12 ist in der Fig. 1 und im Detail auch in den Fig. 3-8 gezeigt.

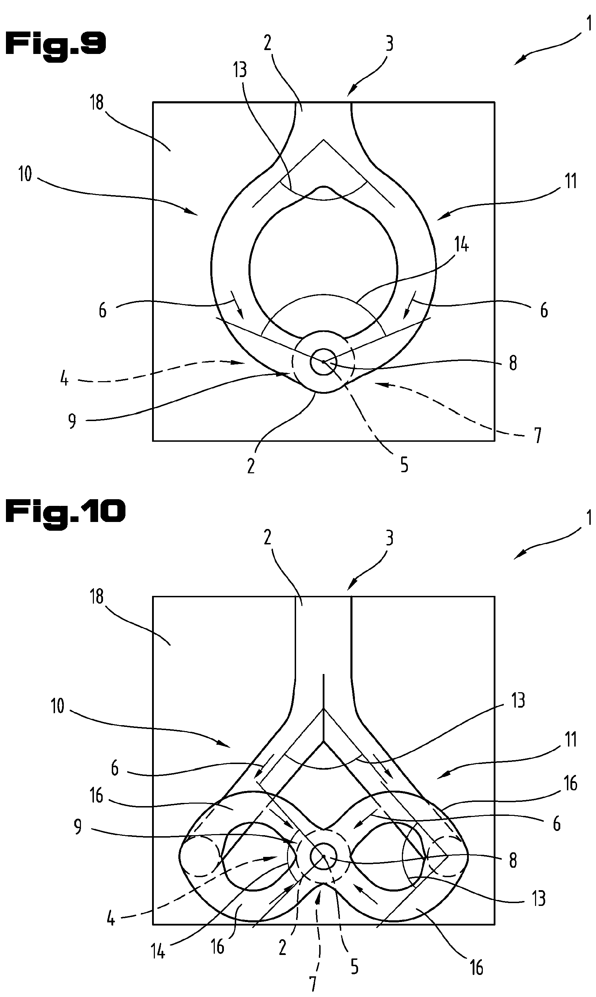

Der erste Teilkanal 10 und der zweite Teilkanal 11 können in einem zweiten Winkel 13 von 20° bis 270°, bevorzugt von 20° bis 180°, zueinander auseinanderlaufen. Alternativ oder zusätzlich kann es sein, dass die weiteren Teilkanäle 16 in einem zweiten Winkel 13 von 20° bis 270°, bevorzugt von 20° bis 180°, zueinander auseinanderlaufen. Dies ist in der Fig. 1 und im Detail auch in den Fig. 3 und 4, sowie insbesondere in den Fig. 9 und 10 gezeigt.

Der erste Teilkanal 10 und der zweite Teilkanal 11 können in einem dritten Winkel 14 von 90° bis 180° zueinander zusammenlaufen. Dies ist in der Fig. 1 und im Detail auch in der Fig. 3 und Fig. 9 gezeigt. Alternativ oder zusätzlich können die weiteren Teilkanäle 16 in einem dritten Winkel 14 von 90° bis 180° zueinander zusammenlaufen. Dies ist in der Fig. 1 und im Detail auch in der Fig. 4 und Fig. 10 gezeigt.

Der Kanal 2 kann zumindest abschnittsweise in einer Ebene 15 angeordnet sein, wobei der erste Teilkanal 10 und der zweite Teilkanal 11 zumindest im Wesentlichen in der Ebene 15 angeordnet sind. Dies ist in der Fig. 1 und im Detail auch in der Fig. 3 und Fig. 5 gezeigt. Dabei kann es zweckmäßig sein, wenn die Mittelachse 5 im rechten Winkel oder zumindest im Wesentlichen im rechten Winkel zu der Ebene 15 ausgerichtet ist.

Der Kanal 2 kann zumindest abschnittsweise in einer Ebene 15 angeordnet sein, wobei der erste Teilkanal 10 und der zweite Teilkanal 11 mit der Ebene 15 jeweils einen vierten Winkel 17 einschließen. Zudem ist ein Bereich ausgebildet, in welchem der erste Teilkanal 10 und der zweite Teilkanal 11 parallel zur Ebene 15 verlaufen. Dies ist in der Fig. 1 und im Detail auch in der Fig. 4 und Fig. 6 gezeigt. Dabei kann es zweckmäßig sein, wenn die Mittelachse 5 im rechten Winkel oder zumindest im Wesentlichen im rechten Winkel zu der Ebene 15 ausgerichtet ist.

Der erste Teilkanal 10 und der zweite Teilkanal 11 können im Wesentlichen symmetrisch wieder in einen Kanal 2 zusammengeführt sein. Dies ist in der Fig. 1 und im Detail auch in den Fig. 3, 5, 7 und 9 gezeigt. Zudem können die weiteren Teilkanäle 16 im Wesentlichen symmetrisch wieder in einen Kanal 2 zusammengeführt sein. Dies ist in der Fig. 1 und im Detail auch in den Fig. 4, 6, 8 und 10 gezeigt.

Das Heißkanalwerkzeug 1 kann zumindest einen mittels eines additiven Fertigungsverfahrens hergestellten Abschnitt 18 umfassen. Dabei kann es sein, dass der mittels eines additiven Fertigungsverfahrens hergestellte Abschnitt 18 jenen Bereich umfasst, in dem der erste Teilkanal 10 und der zweite Teilkanal 11 angeordnet sind bzw. in dem die weiteren Teilkanäle 16 angeordnet sind. Das additive Fertigungsverfahren kann mittels eines 3D-Metallsinterverfahrens oder eines 3D-Metalldruckverfahrens durchgeführt werden.

Das in den Fig. 1 und in den Fig. 3-10 gezeigte Heißkanalwerkzeug 1 ist einstückig, also mehrteilig, und umfasst zwei mittels eines additiven Fertigungsverfahrens hergestellte Abschnitte 18 und einen zentralen Abschnitt 22, welcher mittels eines herkömmlichen Herstellungs- und Bearbeitungsverfahren hergestellt ist. In dem gezeigten Ausführungsbeispiel sind die beiden die Teilkanäle 10, 11, 16 umfassenden Abschnitte 18 mittels eines additiven Fertigungsverfahrens hergestellt und der restliche bzw. zentrale Abschnitt 22, welcher mit einer vergleichsweise weniger komplexen Kanalführung ausgebildet ist mit herkömmlichen Fertigungsverfahren hergestellt. Diese beiden Abschnitte 18 mit den können Teilkanälen 10, 11, 16 sind gemäß dem Beispiel jeweils seitlich am zentralen Abschnitt 22 befestigt bzw. angeflanscht. Dabei ist jeder der beiden seitlich angeordneten Abschnitte 18 mit einer Nadelverschlussdüse 7 ausgebildet. Dem Fachmann ist hinlänglich bekannt, dass diese Ausführung lediglich beispielhaft ist, und dass je nach Anforderungen und Anwendungsfall eine Vielzahl weiterer Kanäle, Teilkanäle, Abschnitte, sowie Nadelverschlussdüsen vorgesehen werden können.

Insbesondere sind die gezeigten Kanalführungen bzw. Richtungsänderungen der Kanäle und Teilkanäle lediglich beispielhaft zu verstehen. Natürlich können auch noch weitere, insbesondere auch stark verzweigte oder verwinkelte Kanalführungen vorteilhaft sein. Grundsätzlich kann es auch sein, dass das Heißkanalwerkzeug zusätzlich zu einer oder mehreren Nadelverschlussdüsen auch noch andere Düsenbauarten umfasst. Dies kann je nach Anwendungsgebiet zweckmäßig sein und liegt im Ermessen des Durchschnittsfachmanns. Es ist auch denkbar und gegebenenfalls zweckmäßig, dass das Heißkanalwerkzeug mehrere Kanäle umfasst, die sich von einem Kanaleintritt zu einem, oder mehreren Kanalaustritten erstrecken, wobei die Kanäle nicht zwingend miteinander strömungsverbunden sind.

Insbesondere kann ein Heißkanalwerkzeug, respektive Abschnitte eines Heißkanalwerkzeug auch zweiteilig ausgeführt sein, sodass das Heißkanalwerkzeug oder einzelne Abschnitte quasi aus zwei, gegebenenfalls symmetrischen Halbschalen bzw. Halbelementen zusammensetzbar ist.

Alternativ kann es aber auch überaus zweckmäßig sein, wenn das Heißkanalwerkzeug 1 einteilig ist. Dies ist jedoch nicht figürlich gezeigt.

Der zumindest eine Kanal 2, sowie die Teilkanäle 10, 11, 16können durch Strömungsschleifen bearbeitet sein.

Der erste Teilkanal 10 und der zweite Teilkanal 11 können im Wesentlichen denselben Strömungsquerschnitt aufweisen. Zudem kann es auch sein, dass etwaige weitere Teilkanäle 16 im Wesentlichen denselben Strömungsquerschnitt aufweisen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Heißkanalwerkzeug
- 2: Kanal
- 3: Kanaleintritt
- 4: Kanalaustritt
- 5: Mittelachse
- 6: Strömungsrichtung
- 7: Nadelverschlussdüse
- 8: Ventilnadel
- 9: Nadeldurchgangsöffnung
- 10: erster Teilkanal
- 11: zweiter Teilkanal
- 12: erster Winkel
- 13: zweiter Winkel
- 14: dritter Winkel
- 15: Ebene
- 16: weiterer Teilkanal
- 17: vierter Winkel
- 18: Abschnitt
- 19: Spritzgussvorrichtung
- 20: Nadelschatten
- 21: Anspritzpunkt
- 22: zentraler Abschnitt
- 23: Betätigungsvorrichtung
- 24: Heißkanalregelgerät

## Patentansprüche

1. Heißkanalwerkzeug (1) zum Zuführen einer Schmelze zu einer Kavität, umfassend zumindest einen Kanal (2), welcher Kanal (2) sich von einem Kanaleintritt (3) zu einem Kanalaustritt (4) erstreckt,
und welcher Kanal (2) in Strömungsrichtung (6) betrachtet vor dem Kanalaustritt (4) entlang einer Mittelachse (5) verläuft,
und welcher Kanal (2) in Strömungsrichtung (6) betrachtet vor dem Kanalaustritt (4) mit einer Nadelverschlussdüse (7) koppelbar ist,
welche Nadelverschlussdüse (7) eine Ventilnadel (8) umfasst, welche Ventilnadel (8) entlang der Mittelachse (5) verschiebbar ist,
und wobei der Kanal (2) in Strömungsrichtung (6) betrachtet vor dem Kanalaustritt (4) und auf der Mittelachse (5) eine Nadeldurchgangsöffnung (9) aufweist, durch welche Nadeldurchgangsöffnung (9) die Ventilnadel (8) durchführbar ist,
der Kanal (2) in Strömungsrichtung (6) betrachtet vor der Nadeldurchgangsöffnung (9) zumindest in einen ersten Teilkanal (10) und einen zweiten Teilkanal (11) geteilt ist,
- und dass der erste Teilkanal (10) und der zweite Teilkanal (11) in Strömungsrichtung (6) betrachtet bei und/oder nach der Nadeldurchgangsöffnung (9) wieder in einen Kanal (2) zusammengeführt sind, wobei der erste Teilkanal (10) und der zweite Teilkanal (11) mit der Mittelachse (5) jeweils einen von 90° abweichenden ersten Winkel (12) einschließen,
- und/oder dass der erste Teilkanal (10) in zumindest zwei weitere Teilkanäle (16) geteilt ist und/oder dass der zweite Teilkanal (11) in zumindest zwei weitere Teilkanäle (16) geteilt ist, und dass die weiteren Teilkanäle (16) in Strömungsrichtung (6) betrachtet bei und/oder nach der Nadeldurchgangsöffnung (9) wieder in einen Kanal (2) zusammengeführt sind, wobei die weiteren Teilkanäle (16) mit der Mittelachse (5) jeweils einen von 90° abweichenden ersten Winkel (12) einschließen **dadurch gekennzeichnet, dass** der erste Winkel (12) im Wesentlichen 45° beträgt.

2. Heißkanalwerkzeug (1) nach Anspruch 1 **dadurch gekennzeichnet, dass** der erste Teilkanal (10) und der zweite Teilkanal (11) mit der Mittelachse (5) denselben ersten Winkel (12) einschließen, und/oder dass die weiteren Teilkanäle (16) mit der Mittelachse (5) denselben ersten Winkel (12) einschließen.

3. Heißkanalwerkzeug (1) nach Anspruch 1 **dadurch gekennzeichnet, dass** der erste Teilkanal (10) und der zweite Teilkanal (11) mit der Mittelachse (5) jeweils einen unterschiedlichen ersten Winkel (12) einschließen, und/oder dass die weiteren Teilkanäle (16) mit der Mittelachse (5) jeweils einen unterschiedlichen ersten Winkel (12) einschließen.

4. Heißkanalwerkzeug (1) nach einem der vorhergehenden Ansprüche **dadurch gekennzeichnet, dass** der erste Winkel (12) von 20° bis 89° beträgt und/oder dass der erste Winkel (12) von 91° bis 135° beträgt.

5. Heißkanalwerkzeug (1) nach einem der vorhergehenden Ansprüche **dadurch gekennzeichnet, dass** der erste Teilkanal (10) und der zweite Teilkanal (11) in einem zweiten Winkel (13) von 20° bis 270°, bevorzugt von 20° bis 180°, zueinander auseinanderlaufen, und/oder dass die weiteren Teilkanäle (16) in einem zweiten Winkel (13) von 20° bis 270°, bevorzugt von 20° bis 180°, zueinander auseinanderlaufen.

6. Heißkanalwerkzeug (1) nach einem der vorhergehenden Ansprüche **dadurch gekennzeichnet, dass** der erste Teilkanal (10) und der zweite Teilkanal (11) in einem dritten Winkel (14) von 90° bis 180° zueinander zusammenlaufen und/oder dass die weiteren Teilkanäle (16) in einem dritten Winkel (14) von 90° bis 180° zueinander zusammenlaufen.

7. Heißkanalwerkzeug (1) nach einem der vorhergehenden Ansprüche, **dadurch gekennzeichnet, dass** der Kanal (2) zumindest abschnittsweise in einer Ebene (15) angeordnet ist, und dass der erste Teilkanal (10) und der zweite Teilkanal (11) zumindest im Wesentlichen in der Ebene (15) angeordnet sind.

8. Heißkanalwerkzeug (1) nach einem der vorhergehenden Ansprüche **dadurch gekennzeichnet, dass** der Kanal (2) zumindest abschnittsweise in einer Ebene (15) angeordnet ist, und dass der erste Teilkanal (10) und der zweite Teilkanal (11) mit der Ebene (15) jeweils einen vierten Winkel (17) einschließen und/oder dass der erste Teilkanal (10) und der zweite Teilkanal (11) parallel zur Ebene (15) verlaufen.

9. Heißkanalwerkzeug (1) nach einem der vorhergehenden Ansprüche **dadurch gekennzeichnet, dass** der erste Teilkanal (10) und der zweite Teilkanal (11) im Wesentlichen symmetrisch wieder in einen Kanal (2) zusammengeführt sind, oder dass die weiteren Teilkanäle (16) im Wesentlichen symmetrisch wieder in einen Kanal (2) zusammengeführt sind.

10. Heißkanalwerkzeug (1) nach einem der vorhergehenden Ansprüche **dadurch gekennzeichnet, dass** das Heißkanalwerkzeug (1) zumindest einen mittels eines additiven Fertigungsverfahrens hergestellten Abschnitt (18) umfasst.

11. Heißkanalwerkzeug (1) nach Anspruch 10 **dadurch gekennzeichnet, dass** der mittels eines additiven Fertigungsverfahrens hergestellte Abschnitt (18) jenen Bereich umfasst, in dem der erste Teilkanal (10) und der zweite Teilkanal (11) angeordnet sind und/oder in dem die weiteren Teilkanäle (16) angeordnet sind.

12. Heißkanalwerkzeug (1) nach einem der vorhergehenden Ansprüche **dadurch gekennzeichnet, dass** das Heißkanalwerkzeug (1) einteilig ist.

13. Heißkanalwerkzeug (1) nach einem der vorhergehenden Ansprüche, **dadurch gekennzeichnet, dass** der zumindest eine Kanal (2) und/oder der erste Teilkanal (10) und der zweite Teilkanal (11) durch Strömungsschleifen bearbeitet sind.

14. Heißkanalwerkzeug nach (1) einem der vorhergehenden Ansprüche **dadurch gekennzeichnet, dass** der erste Teilkanal (10) und der zweite Teilkanal (11) im Wesentlichen denselben Strömungsquerschnitt aufweisen und/oder dass die weiteren Teilkanäle (16) im Wesentlichen denselben Strömungsquerschnitt aufweisen.

15. Spritzgussvorrichtung (19) umfassend ein Heißkanalwerkzeug (1) nach einem der Ansprüche 1 bis 14.

16. Verfahren zur Herstellung eines Heißkanalwerkzeugs (1), eines Heißkanalwerkzeugs (1) nach einem der Ansprüche 1 bis 14, **gekennzeichnet dadurch, dass** das Heißkanalwerkzeug (1) oder zumindest ein Abschnitt (18) des Heißkanalwerkzeugs (1) mittels eines additiven Fertigungsverfahrens hergestellt wird.

17. Verfahren nach Anspruch 16, **dadurch gekennzeichnet, dass** das additive Fertigungsverfahren mittels eines 3D-Metallsinterverfahrens oder eines 3D-Metalldruckverfahrens durchgeführt wird.

## Claims

1. A hot runner mold (1) for feeding a molten material to a cavity, comprising at least one channel (2), which channel (2) extends from a channel inlet (3) to a channel outlet (4), and which channel (2), as viewed in the flow direction (6), runs along a central axis (5) upstream of the channel outlet (4),
and which channel (2), as viewed in the flow direction (6), is couplable to a needle valve nozzle (7) upstream of the channel outlet (4),
which needle valve nozzle (7) comprises a valve needle (8), which valve needle (8) is slidable along the central axis (5),
and wherein the channel (2), as viewed in the flow direction (6), has a needle passage opening (9) upstream of the channel outlet (4) and on the central axis (5), through which needle passage opening (9) the valve needle (8) can be passed,
the channel (2), as viewed in the flow direction (6), is divided upstream of the needle passage opening (9) into at least a first subchannel (10) and a second subchannel (11),
- and that the first subchannel (10) and the second subchannel (11), as viewed in the flow direction (6), are recombined into one channel (2) at and/or after the needle passage opening (9), wherein the first subchannel (10) and the second subchannel (11), with the central axis (5), each enclose a first angle (12) that differs from 90°,
- and/or that the first subchannel (10) is divided into at least two further subchannels (16) and/or that the second subchannel (11) is divided into at least two further subchannels (16), and that the further subchannels (16), as viewed in the flow direction (6), are recombined into one channel (2) at and/or after the needle passage opening (9), wherein the further subchannels (16), with the central axis (5), each enclose a first angle (12) that differs from 90°, **characterized in that** the first angle (12) is essentially 45°.

2. The hot runner mold (1) according to claim 1, **characterized in that** the first subchannel (10) and the second subchannel (11) enclose the same first angle (12) with the central axis (5), and/or that the other subchannels (16) enclose the same first angle (12) with the central axis (5).

3. The hot runner mold (1) according to claim 1, **characterized in that** the first subchannel (10) and the second subchannel (11) each enclose a different first angle (12) with the central axis (5), and/or that the further subchannels (16) each enclose a different first angle (12) with the central axis (5).

4. The hot runner mold (1) according to one of the preceding claims, **characterized in that** the first angle (12) ranges from 20° to 89° and/or that the first angle (12) ranges from 91° to 135°.

5. The hot runner mold (1) according to one of the preceding claims, **characterized in that** the first subchannel (10) and the second subchannel (11) diverge from one another at a second angle (13) of 20° to 270°, preferably from 20° to 180°, relative to one another, and/or that the further subchannels (16) diverge from one another at a second angle (13) of 20° to 270°, preferably from 20° to 180°, relative to one another.

6. The hot runner mold (1) according to one of the preceding claims, **characterized in that** the first subchannel (10) and the second subchannel (11) converge at a third angle (14) of 90° to 180° relative to one another, and/or that the further subchannels (16) converge at a third angle (14) of 90° to 180° relative to one another.

7. The hot runner mold (1) according to one of the preceding claims, **characterized in that** the channel (2) is arranged, at least in some sections, in a plane (15), and that the first subchannel (10) and the second subchannel (11) are arranged at least substantially in the plane (15).

8. The hot runner mold (1) according to one of the preceding claims, **characterized in that** the channel (2) is arranged, at least in some sections, in a plane (15), and that the first subchannel (10) and the second subchannel (11) each enclose a fourth angle (17) with the plane (15) and/or that the first subchannel (10) and the second subchannel (11) extend parallel to the plane (15).

9. The hot runner mold (1) according to one of the preceding claims, **characterized in that** the first subchannel (10) and the second subchannel (11) are essentially symmetrically recombined into one channel (2), or that the further subchannels (16) are essentially symmetrically recombined into one channel (2).

10. The hot runner mold (1) according to one of the preceding claims, **characterized in that** the hot runner mold (1) comprises at least one section (18) manufactured by means of an additive manufacturing process.

11. The hot runner mold (1) according to claim 10, **characterized in that** the section (18) manufactured by means of an additive manufacturing process comprises the region in which the first subchannel (10) and the second subchannel (11) are arranged and/or in which the further subchannels (16) are arranged.

12. The hot runner mold (1) according to one of the preceding claims, **characterized in that** the hot runner mold (1) is formed as one piece.

13. The hot runner mold (1) according to one of the preceding claims, **characterized in that** the at least one channel (2) and/or the first subchannel (10) and the second subchannel (11) are processed by flow machining.

14. The hot runner mold (1) according to one of the preceding claims, **characterized in that** the first subchannel (10) and the second subchannel (11) essentially have the same flow cross-section and/or that the further subchannels (16) essentially have the same flow cross-section.

15. An injection molding apparatus (19) comprising a hot runner mold (1) according to one of claims 1 to 14.

16. A method for manufacturing a hot runner mold (1) according to one of claims 1 to 14, **characterized in that** the hot runner mold (1) or at least a section (18) of the hot runner mold (1) is manufactured by means of an additive manufacturing process.

17. The method according to claim 16, **characterized in that** the additive manufacturing process is carried out using a 3D metal sintering process or a 3D metal printing process.

## Revendications

1. Moule à canal chaud (1) pour alimenter une masse fondue vers une cavité, comprenant au moins un canal (2), lequel canal (2) s'étend d'une entrée de canal (3) à une sortie de canal (4),
et lequel canal (2), vu dans une direction d'écoulement (6), s'étend le long d'un axe central (5) en amont de la sortie de canal (4),
et lequel canal (2), vu dans la direction d'écoulement (6), peut être couplé à une buse à pointeau (7) en amont de la sortie de canal (4),
Laquelle buse à pointeau (7) comprend un pointeau (8), ledit pointeau (8) peut être déplacé le long de l'axe central (5),
et dans lequel le canal (2), vu dans la direction d'écoulement (6), présente une ouverture de passage de pointeau (9) en amont de la sortie de canal (4) et sur l'axe central (5), ouverture de passage de pointeau(9) à travers laquelle le pointeau (8) peut être introduit, le canal (2), vu dans la direction d'écoulement (6), est divisé en au moins un premier canal partiel (10) et un second canal partiel (11) en amont de l'ouverture de passage de pointeau (9),
- et le premier canal partiel (10) et le second canal partiel (11), vus dans la direction d'écoulement (6), sont à nouveau rapprochés l'un de l'autre dans un canal (2) au niveau et/ou en aval de l'ouverture de passage de pointeau (9), dans lequel le premier canal partiel (10) et le second canal partiel (11) forment chacun avec l'axe central (5) un premier angle (12) différent de 90°,
- et/ou le premier canal partiel (10) est divisé en au moins deux autres canaux partiels (16) et/ou le second canal partiel (11) est divisé en au moins deux autres canaux partiels (16), et les autres canaux partiels (16), vus dans la direction d'écoulement (6), sont à nouveau réunis dans un canal (2) au niveau et/ou en aval de l'ouverture de passage de pointeau (9), les autres canaux partiels (16) formant chacun un premier angle (12) différent de 90° avec l'axe central (5), **caractérisé en ce que** le premier angle (12) est sensiblement de 45°.

2. Moule à canal chaud (1) selon la revendication 1, **caractérisé en ce que** le premier canal partiel (10) et le second canal partiel (11) forment le même premier angle (12) avec l'axe central (5), et/ou **en ce que** les canaux partiels supplémentaires (16) forment le même premier angle (12) avec l'axe central (5).

3. Moule à canal chaud (1) selon la revendication 1, **caractérisé en ce que** le premier canal partiel (10) et le second canal partiel (11) forment chacun un premier angle (12) différent avec l'axe central (5), et/ou **en ce que** les canaux partiels supplémentaires (16) forment chacun un premier angle (12) différent avec l'axe central (5).

4. Moule à canal chaud (1) selon l'une quelconque des revendications précédentes, **caractérisé en ce que** le premier angle (12) est compris entre 20° et 89° et/ou **en ce que** le premier angle (12) est compris entre 91° et 135°.

5. Moule à canal chaud (1) selon l'une quelconque des revendications précédentes, **caractérisé en ce que** le premier canal partiel (10) et le second canal partiel (11) divergent l'un par rapport à l'autre selon un deuxième angle (13) de 20° à 270°, de préférence de 20° à 180°, et/ou **en ce que** les canaux partiels supplémentaires (16) divergent l'un par rapport à l'autre selon un deuxième angle (13) de 20° à 270°, de préférence de 20° à 180°.

6. Moule à canal chaud (1) selon l'une quelconque des revendications précédentes, **caractérisé en ce que** le premier canal partiel (10) et le second canal partiel (11) convergent l'un par rapport à l'autre selon un troisième angle (14) de 90° à 180° et/ou **en ce que** les canaux partiels supplémentaires (16) convergent l'un par rapport à l'autre selon un troisième angle (14) de 90° à 180°.

7. Moule à canal chaud (1) selon l'une quelconque des revendications précédentes, **caractérisé en ce que** le canal (2) est agencé au moins par sections dans un plan (15), et **en ce que** le premier canal partiel (10) et le second canal partiel (11) sont agencés au moins sensiblement dans le plan (15).

8. Moule à canal chaud (1) selon l'une quelconque des revendications précédentes, **caractérisé en ce que** le canal (2) est agencé au moins par sections dans un plan (15), et **en ce que** le premier canal partiel (10) et le second canal partiel (11) forment chacun un quatrième angle (17) avec le plan (15) et/ou **en ce que** le premier canal partiel (10) et le second canal partiel (11) s'étendent parallèlement au plan (15).

9. Moule à canal chaud (1) selon l'une quelconque des revendications précédentes, **caractérisé en ce que** le premier canal partiel (10) et le second canal partiel (11) sont réunis de manière sensiblement symétrique dans un canal (2), ou **en ce que** les canaux partiels supplémentaires (16) sont réunis de manière sensiblement symétrique dans un canal (2).

10. Moule à canal chaud (1) selon l'une quelconque des revendications précédentes, **caractérisé en ce que** le moule à canal chaud (1) comprend au moins une section (18) fabriquée au moyen d'un procédé de fabrication additive.

11. Moule à canal chaud (1) selon la revendication 10, **caractérisé en ce que** la section (18) fabriquée au moyen d'un procédé de fabrication additive comprend la zone dans laquelle le premier canal partiel (10) et le second canal partiel (11) sont agencés et/ou dans laquelle les canaux partiels supplémentaires (16) sont agencés.

12. Moule à canal chaud (1) selon l'une quelconque des revendications précédentes, **caractérisé en ce que** le moule à canal chaud (1) est réalisé d'une seule pièce.

13. Moule à canal chaud (1) selon l'une quelconque des revendications précédentes, **caractérisé en ce que** le au moins un canal (2) et/ou le premier canal partiel (10) et le second canal partiel (11) sont usinés par rectification par écoulement.

14. Moule à canal chaud (1) selon l'une quelconque des revendications précédentes, **caractérisé en ce que** le premier canal partiel (10) et le second canal partiel (11) présentent sensiblement la même section d'écoulement et/ou **en ce que** les canaux partiels supplémentaires (16) présentent sensiblement la même section d'écoulement.

15. Dispositif de moulage par injection (19) comprenant un moule à canal chaud (1) selon l'une quelconque des revendications 1 à 14.

16. Procédé de fabrication d'un moule à canal chaud (1) selon l'une quelconque des revendications 1 à 14, **caractérisé en ce que** le moule à canal chaud (1) ou au moins une section (18) du moule à canal chaud (1) est fabriqué(e) au moyen d'un procédé de fabrication additive.

17. Procédé selon la revendication 16, **caractérisé en ce que** le procédé de fabrication additive est réalisé au moyen d'un procédé de frittage de métal 3D ou d'un procédé d'impression de métal 3D.
